# EUROPÄISCHE PATENTSCHRIFT

(11) **EP 2 080 965 B1**
(45) Veröffentlichungstag und Bekanntmachung des Hinweises auf die Patenterteilung: **20.09.2017**
(21) Anmeldenummer: 09100037.2
(22) Anmeldetag: 14.01.2009
(51) Int. Cl.: F24J 2/52

(54) **Vorrichtung zur Befestigung eines Solarkollektors**
Device for attaching a solar collector
Dispositif de fixation d'un collecteur solaire

(30) Priorität: 21.01.2008 AT 782008
(43) Veröffentlichungstag der Anmeldung: 22.07.2009
(73) Patentinhaber: Vaillant GmbH, 42859 Remscheid (DE)
(72) Erfinder: Meiske, Gerhard, 42855, Remscheid (DE)

(56) Entgegenhaltungen:
- DE-A1- 2 335 223
- DE-A1- 10 132 557

## Beschreibung

Die Erfindung bezieht sich auf eine Vorrichtung zur Befestigung eines Solarkollektors auf mindestens einem Dachhaken.

Solarkollektoren werden meistens auf einem Dach über eine Trägerkonstruktion (z.B. ein Dachhaken oder eine Montageschiene) befestigt. Die Kollektorbefestigung ist bei herkömmlichen Montagesystemen aufwendig, zeitintensiv und oft nicht werkzeugfrei. Auch eine Verstellbarkeit des Kollektors wird mit einer hohen Anzahl von Teilen gewährleistet. Ferner können Dachaufbauten ein seitliches Einschieben des Kollektors auf das entsprechende Trägersystem verhindern und die Montage erschweren.

DE 101 32 557 A1 zeigt ein Montageprofil zur Befestigung von Photovoltaik-Modulen. Ein Montageprofil wird mittels eines Sparrenankers an einer Dachkonstruktion befestigt. In das Montageprofil wird dann ein Einhängehaken eingeklinkt. Ein Photovoltaik-Modul wird in diesen Einhängehaken eingeschoben und anschließend mit dem Montageprofil verschraubt.

Aufgabe der vorliegenden Erfindung ist es, eine Montage eines Solarkollektors auf einem Dachhaken auch ohne Werkzeug wie Schraubenschlüssel oder ähnliches zu ermöglichen.

Dies wird gemäß den Merkmalen der unabhängigen Vorrichtungsansprüche 1 und 2 erreicht. Anspruch 1 schützt eine Befestigungsvorrichtung für die Befestigung eines Solarkollektors, umfassend mindestens einen Dachhaken. Der Dachhaken verfügt dabei über eine Verzahnung auf einer Seite, mit Spannstücken, welche auf dem mindestens einen Dachhaken verschiebbar angebracht sind, wobei die angebrachten Spannstücke auf der der Verzahnung des Dachhakens abgewandten Seite jeweils über einen Spannhebel verfügen und die Spannstücke auf der Seite der Verzahnung über mindestens ein federelastisches Haltestück verfügen. Gemäß Anspruch 1 umfasst die Befestigungsvorrichtung mindestens eine Montageschiene zur Befestigung des Solarkollektors auf dem Dachhaken, die über eine Verzahnung verfügt, die in die Verzahnung des mindestens einen Dachhakens formschlüssig eingreift, wobei mittels des Spannhebels der Solarkollektor über die federelastischen Haltestücke kraftschlüssig mit dem mindestens einen Dachhaken verbindbar oder lösbar ist.

Anspruch 2 schützt einen Solarkollektor und eine Befestigungsvorrichtung, bei dem anstelle der Montageschiene der Solarkollektor selbst über die Verzahnung verfügt, welche in die Verzahnung des mindestens einen Dachhakens formschlüssig eingreift.

Mit der erfindungsgemäßen Befestigungsvorrichtung wird die Montagezeit reduziert und die Sicherheit bei der Montage erhöht. Ein Werkzeug ist für die Befestigung des Solarkollektors nicht mehr notwendig.

Vorteilhafte Ausgestaltungen ergeben sich durch die Merkmale der abhängigen Ansprüche. Die Erfindung wird nun anhand der folgenden Figuren detailliert erläutert. Hierbei zeigen
Fig. 1 einen Solarkollektor, der am Dach mittels des Dachhakens der erfindungsgemäßen Befestigungsvorrichtung befestigt ist
Fig. 2 der Dachhaken der erfindungsgemäßen Befestigungsvorrichtung, mit einem Spannstück
Fig. 3a bis 3f die einzelne Schritte der Befestigung des Solarkollektors
Fig. 4 Ansicht des Dachhakens mit der Montageschiene von oben
Fig. 5 Befestigung des erfindungsgemäßen Solarkollektors an seinem unteren Ende am Dach mittels des Dachhakens
Fig. 6 Befestigung des erfindungsgemäßen Solarkollektors an seinem oberen Ende am Dach mittels des Dachhakens.

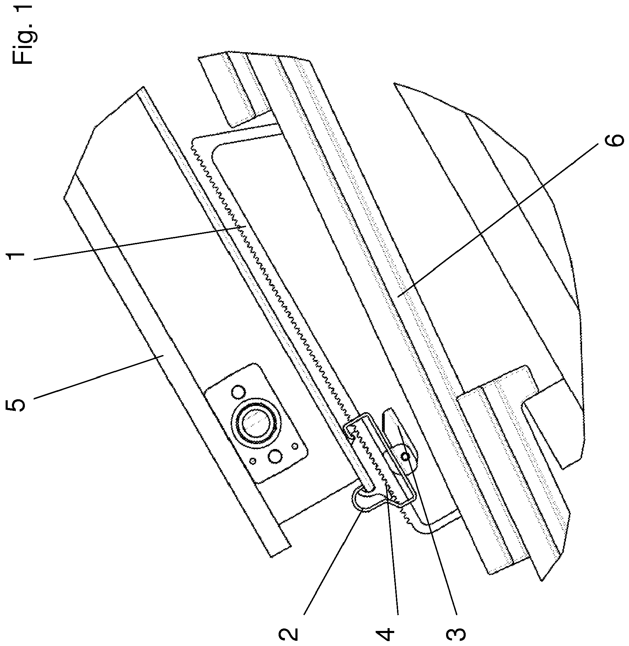

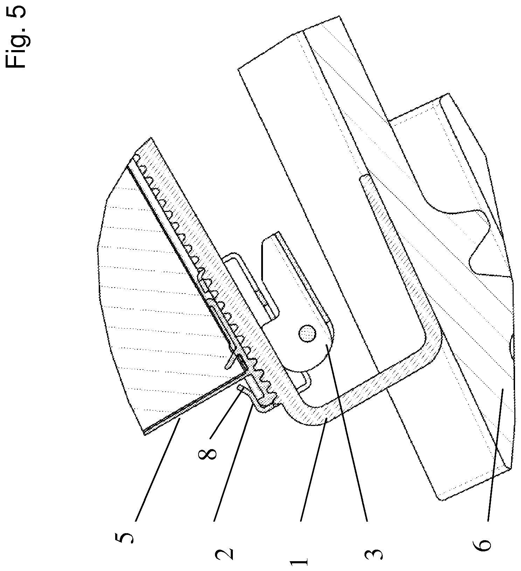

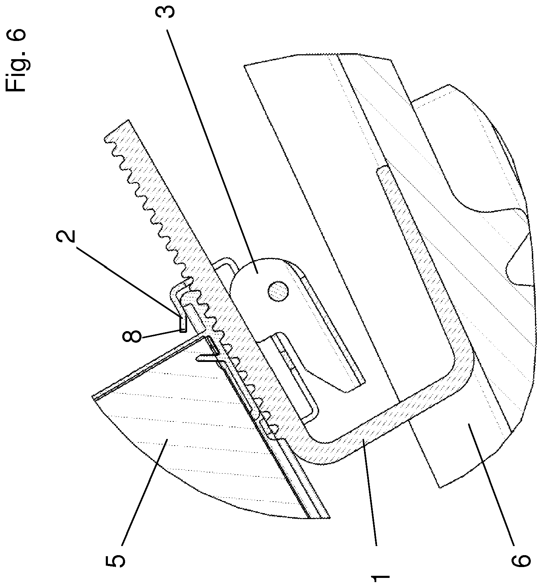

Figur 1 zeigt ein Solarkollektor 5, der mittels eines Dachhakens 1, mindestens einer Montageschiene 4 und mindestens eines Spannstücks 2 mit einem Spannhebel 3 an einem Dach(ziegel) 6 befestigt ist. Wie viele Spannstücke zur Befestigung des Kollektors verwendet werden, hängt von den örtlichen Gegebenheiten und der Kollektorkonstruktion ab. Vorzugsweise werden vier Spannstücke gebraucht. Der Solarkollektor 5 kann in einem weiteren Ausführungsbeispiel in den Figuren 5 und 6 auch ohne die Montageschiene 4 am Dach 6 befestigt werden.

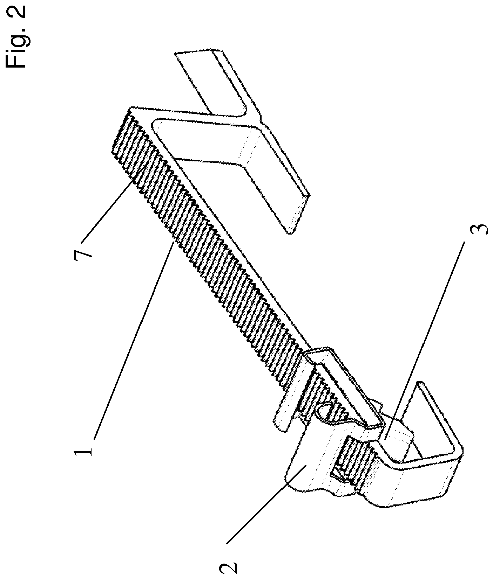

Wie aus Figur 2 ersichtlich, verfügt der Dachhaken 1 über eine Verzahnung 7 auf einer Seite und Spannstücken 2, welche auf dem Dachhaken 1 verschiebbar angebracht sind. Die Verzahnung 7 kann sich prinzipiell auch auf beiden Seiten des Dachhakens 1 befinden. Ferner verfügen die Spannstücke 2 auf der der Verzahnung 7 abgewandten Seite jeweils über einen Spannhebel 3.

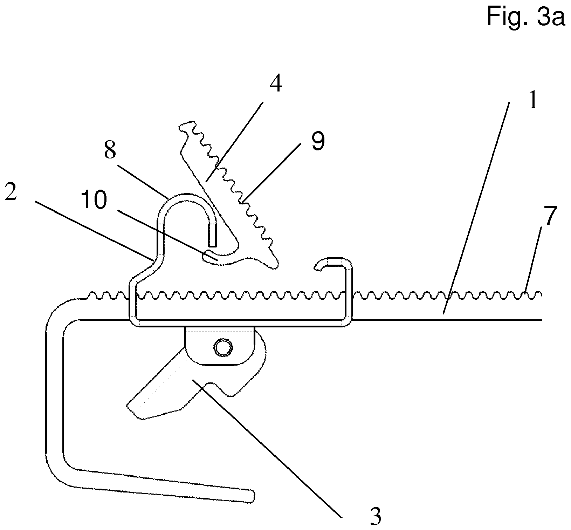

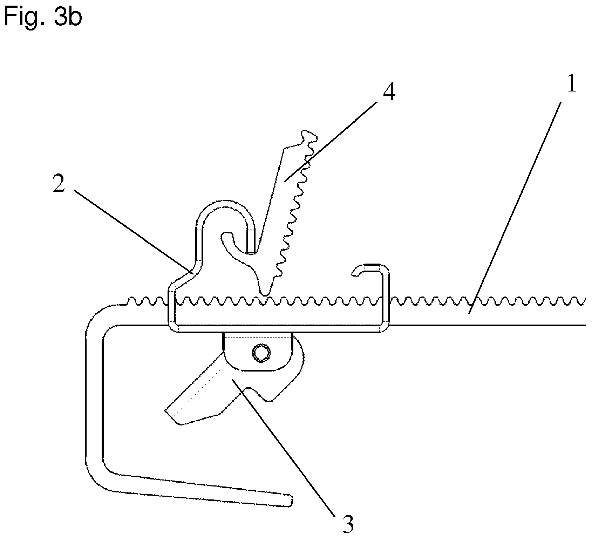

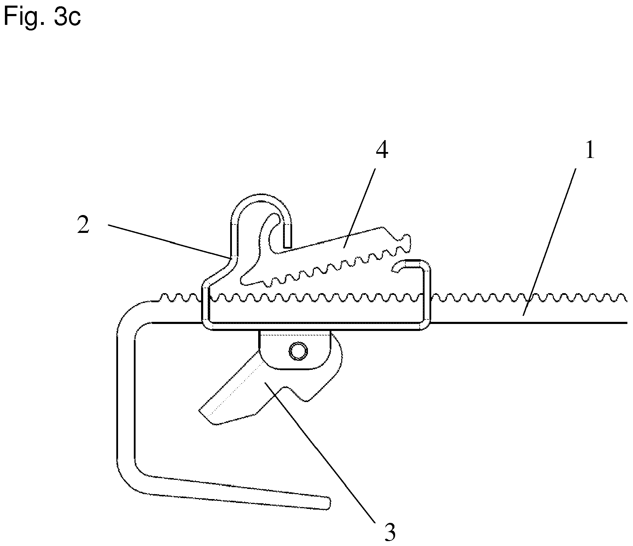

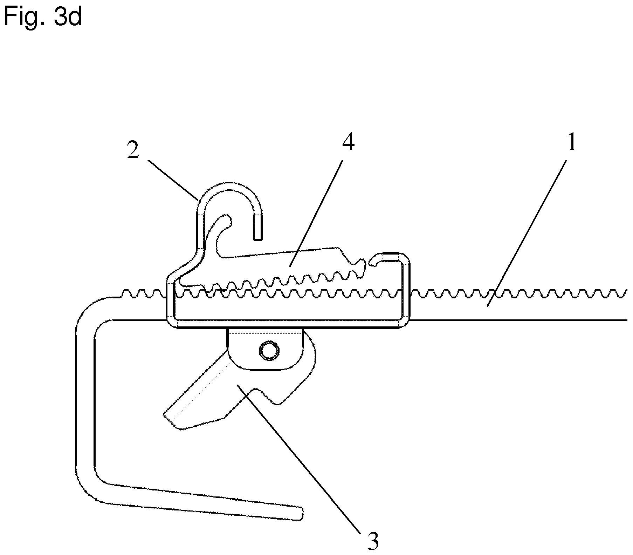

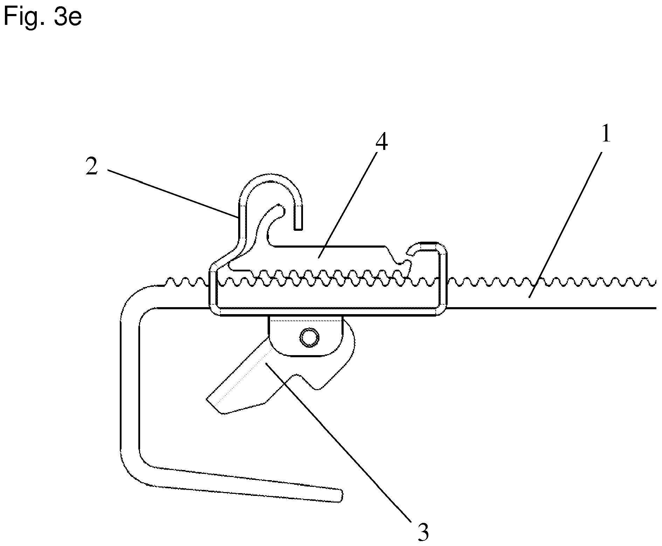

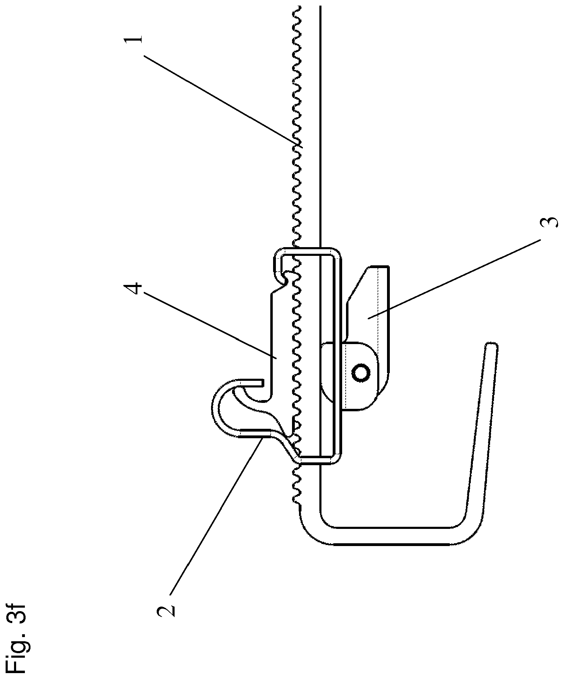

Figuren 3a bis 3f zeigen die Funktionsweise der erfindungsgemäßen Befestigungsvorrichtung. Die Spannstücke 2 auf der Seite der Verzahnung 7 verfügen über mindestens ein federelastisches Haltestück 8. Der Solarkollektor 5 oder die mindestens eine Montageschiene 4 zur Befestigung des Solarkollektors 5 verfügen ebenfalls über eine Verzahnung 9, die in die Verzahnung 7 des Dachhakens 1 formschlüssig eingreift. Mittels des Spannhebels 3 der Spannstücke 2 und über die federelastischen Haltestücke 8 sind der Solarkollektor 5 oder die Montageschiene 4 zur Befestigung des Solarkollektors 5 kraftschlüssig mit dem Dachhaken 1 verbindbar oder lösbar. Dies erfolgt nachdem die Spannstücke 2 auf den Dachhaken 1 derart eingeschoben und vorpositioniert sind, dass die Spannstücke 2 die waagerechte Position, wie in den Figuren 3a bis 3f gezeigt, auf dem Dachhaken 1 eingenommen haben. Die Montageschiene 4 gleitet danach entlang des federelastischen Haltestücks 8 des Spannstücks 2, wird dann durch das Ineinandergreifen der Verzahnung 7 und 9 formschlüssig fixiert und mit dem Spannhebel 3 des Spannstücks 2 kraftschlüssig gesichert. Mit dem Spannen des Hebels 3 wird ein Formschluss zwischen der Montageschiene 4, der Spannstücke 2 und dem Dachhaken 1 sicher gestellt. Das federelastische Haltestück 8 ist so geformt, das die Aufnahme und die Fixierung der Montageschiene 4 während und nach der Montage begünstigt wird, in dem beispielsweise das Haltestück 8 hakenförmig ausgebildet ist. Die Montageschiene 4 endet auf einer der Verzahnung 9 abgewandten Seite mit einem Seitenelement 10. Dieses Element 10 ist dem hakenförmigen Haltestück 8 geometrisch angepasst, so dass dieses in das Haltestück 8 während der Montage gleitet und die Montageschiene 4 gegen ein Rausrutschen sichert.

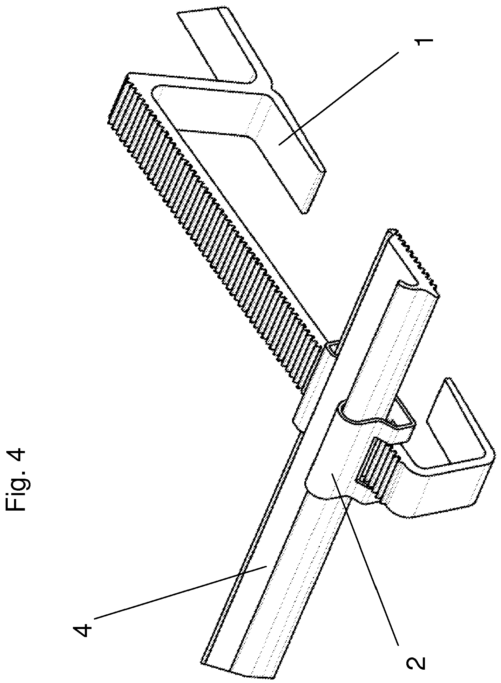

Figur 4 zeigt die im Spannstück 2 bereits befestigte Montageschiene 4 zur Aufnahme des Solarkollektors 5. Der Solarkollektor 5 wird auf die Montageschiene 4 aufgelegt, dann nach Lösen der Spannstücke 2 durch den Spannhebel 3 unter die Spannstücke 2 eingeschoben und abschließend mittels des Spannhebels 3 gespannt und gesichert.

Eine weitere bevorzugte Ausführungsform der Erfindung ist in den Figuren 5 und 6 dargestellt. Dort erfolgt die Befestigung des Solarkollektors 5 jeweils an seinem unteren bzw. oberen Ende am Dach 6 direkt mithilfe des Dachhakens 1, der Spannstücke 2 und des Spannhebels 3. Eine Montageschiene 4 ist nicht erforderlich.

Durch die geometrisch abgestimmte Ausbildung der Montageschiene 4 bzw. des Solarkollektors 5 und der Spannstücke 2 lässt sich die Montageschiene bzw. der Solarkollektor auf einfache, schnelle und sichere Weise ohne Werkzeug befestigen.

## Patentansprüche

1. Befestigungsvorrichtung für die Befestigung eines Solarkollektors (5), umfassend mindestens einen Dachhaken (1), der über eine Verzahnung (7) auf einer Seite verfügt, wobei die Befestigungsvorrichtung mindestens eine Montageschiene (4) zur Befestigung des Solarkollektors (5) auf dem Dachhaken (1) umfasst, die über eine Verzahnung (9) verfügt, die in die Verzahnung (7) des mindestens einen Dachhakens (1) formschlüssig eingreift, **dadurch gekennzeichnet, dass** die Befestigungsvorrichtung mindestens ein Spannstück (2) umfasst, welches auf dem mindestens einen Dachhaken (1) verschiebbar angebracht ist,
wobei das mindestens eine angebrachte Spannstück (2) auf der der Verzahnung (7) des Dachhakens (1) abgewandten Seite jeweils über einen Spannhebel (3) verfügt, wobei das mindestens eine Spannstück (2) auf der Seite der Verzahnung (7) über mindestens ein federelastisches Haltestück (8) verfügt, wobei mittels des Spannhebels (3) die mindestens eine Montageschiene (4) zur Befestigung des Solarkollektors (5) über die federelastischen Haltestücke (8) kraftschlüssig mit dem mindestens einen Dachhaken (1) verbindbar oder lösbar ist.

2. Solarkollektor und Befestigungsvorrichtung für die Befestigung des Solarkollektors (5), wobei die Befestigungsvorrichtung mindestens einen Dachhaken (1) umfasst, der über einen Verzahnung (7) auf einer Seite verfügt, **dadurch gekennzeichnet, dass**
die Befestigungsvorrichtung mindestens ein Spannstück (2) umfasst, welches auf dem mindestens einen Dachhaken (1) verschiebbar angebracht ist,
wobei das mindestens eine angebrachte Spannstück (2) auf der der Verzahnung (7) des Dachhakens (1) abgewandten Seite jeweils über einen Spannhebel (3) verfügt, wobei das mindestens eine Spannstück (2) auf der Seite der Verzahnung (7) über mindestens ein federelastisches Haltestück (8) verfügt,
wobei der Solarkollektor (5) über eine Verzahnung (9) verfügt, die in die Verzahnung (7) des mindestens einen Dachhakens (1) formschlüssig eingreift,
wobei mittels des Spannhebels (3) der Solarkollektor (5) über die federelastischen Haltestücke (8) kraftschlüssig mit dem mindestens einen Dachhaken (1) verbindbar oder lösbar ist.

3. Befestigungsvorrichtung nach Anspruch 1, **dadurch gekennzeichnet, dass** die zwei Enden der federelastische Haltestücke (8) der Spannstücke (2) derart ausgebildet sind, dass ein Seitenelement (10) der mindestens eine Montageschiene (4) darin gesichert ist.

4. Solarkollektor und Befestigungsvorrichtung nach Anspruch 2, **dadurch gekennzeichnet, dass** die zwei Enden der federelastische Haltestücke (8) der Spannstücke (2) derart ausgebildet sind, dass ein Seitenelement (10) des Solarkollektors (5) darin gesichert ist.

5. Befestigungsvorrichtung nach Anspruch 3, **dadurch gekennzeichnet, dass** die federelastische Haltestücke (8) der Spannstücke (2) hakenförmig ausgebildet sind.

6. Solarkollektor und Befestigungsvorrichtung nach Anspruch 4, **dadurch gekennzeichnet, dass** die federelastische Haltestücke (8) der Spannstücke (2) hakenförmig ausgebildet sind.

## Claims

1. Mounting device for mounting a solar collector (5), comprising at least one roof hook (1) which has teeth (7) on one side, wherein the mounting device comprises at least one mounting rail (4) for mounting the solar collector (5) on the roof hook (1), the mounting rail having teeth (9) which engage in the teeth (7) of the at least one roof hook (1) in a form-fitting manner, **characterised in that** the mounting device comprises at least one clamping element (2) movably mounted on the at least one roof hook (1), wherein the at least one mounted clamping element (2) comprises a clamping lever (3) on the side facing away from the teeth (7) of the roof hook (1), wherein the at least one clamping element (2) comprises at least one spring elastic retaining element (8) on the side of the teeth (7), wherein the at least one mounting rail (4) for mounting the solar collector (5) is connected to or detached from the at least one roof hook (1) via the spring elastic retaining elements (8) by means of the clamping lever (3) in a force-fitting manner.

2. Solar collector and mounting device for mounting the solar collector (5), wherein the mounting device comprises at least one roof hook (1) which has teeth (7) on one side, **characterised in that** the mounting device comprises at least one clamping element (2) movably mounted on the at least one roof hook (1), wherein the at least one mounted clamping element (2) comprises a clamping lever (3) on the side facing away from the teeth (7) of the roof hook (1), wherein the at least one clamping element (2) comprises at least one spring elastic retaining element (8) on the side of the teeth (7), wherein the solar collector (5) comprises teeth (9) which engage in the teeth (7) of the at least one roof hook (1) in a form-fitting manner, wherein the solar collector (5) is connected to or detached from the at least one roof hook (1) via the spring elastic retaining elements (8) by means of the clamping lever (3) in a force-fitting manner.

3. Mounting device according to claim 1, **characterised in that** the two ends of the spring elastic retaining elements (8) of the clamping elements (2) are configured so that a side element (10) of the at least one mounting rail (4) is secured therein.

4. Solar collector and mounting device according to claim 2, **characterised in that** the two ends of the spring elastic retaining elements (8) of the clamping elements (2) are configured so that a side element (10) of the solar collector (5) is secured therein.

5. Mounting device according to claim 3, **characterised in that** the spring elastic retaining elements (8) of the clamping elements (2) are hook-shaped.

6. Solar collector and mounting device according to claim 4, **characterised in that** the spring elastic retaining elements (8) of the clamping elements (2) are hook-shaped.

## Revendications

1. Dispositif de fixation pour la fixation d'un collecteur solaire (5),
comprenant au moins un crochet de toit (1), qui dispose d'une denture (7) sur un côté, dans lequel le dispositif de fixation comprend au moins un rail de montage (4) servant à fixer le collecteur solaire (5) sur le crochet de toit (1), lequel rail de montage dispose d'une denture (9), qui vient en prise par complémentarité de forme avec la denture (7) de l'au moins un crochet de toit (1),
**caractérisé en ce que**
le dispositif de fixation comprend au moins une pièce de serrage (2), qui est installée de manière à pouvoir être coulissée sur l'au moins un crochet de toit (1),
dans lequel l'au moins une pièce de serrage (2) installée dispose respectivement d'un levier de serrage (3) sur le côté opposé à la denture (7) du crochet de toit (1),
dans lequel l'au moins une pièce de serrage (2) dispose d'au moins une pièce de maintien (8) élastique à la manière d'un ressort sur le côté de la denture (7),
dans lequel l'au moins un rail de montage (4) servant à la fixation du collecteur solaire (5) peut être détaché ou relié par force à l'au moins un crochet de toit (1) par l'intermédiaire des pièces de maintien (8) élastiques à la manière d'un ressort au moyen du levier de serrage (3).

2. Collecteur solaire et dispositif de fixation pour la fixation du collecteur solaire (5),
dans lequel le dispositif de fixation comprend au moins un crochet de toit (1), qui dispose d'une denture (7) sur un côté,
**caractérisé en ce que**
le dispositif de fixation comprend au moins une pièce de serrage (2), qui est installée de manière à pouvoir coulisser sur l'au moins un crochet de toit (1),
dans lequel l'au moins une pièce de serrage (2) installée dispose respectivement d'un levier de serrage (3) sur le côté opposé à la denture (7) du crochet de toit (1),
dans lequel l'au moins une pièce de serrage (2) dispose d'au moins une pièce de maintien (8) élastique à la manière d'un ressort sur le côté de la denture (7),
dans lequel le collecteur solaire (5) dispose d'une denture (9), qui vient en prise par complémentarité de forme avec la denture (7) de l'au moins un crochet de toit (1),
dans lequel le collecteur solaire (5) peut être détaché ou relié par force à l'au moins un crochet de toit (1) par l'intermédiaire des pièces de maintien (8) élastiques à la manière d'un ressort au moyen du levier de serrage (3).

3. Dispositif de fixation selon la revendication 1, **caractérisé en ce que** les deux extrémités des pièces de maintien (8) élastiques à la manière d'un ressort des pièces de serrage (2) sont réalisées de telle manière qu'un élément latéral (10) de l'au moins un rail de montage (4) y est bloqué.

4. Collecteur solaire et dispositif de fixation selon la revendication 2, **caractérisé en ce que** les deux extrémités des pièces de maintien (8) élastiques à la manière d'un ressort des pièces de serrage (2) sont réalisées de telle manière qu'un élément latéral (10) du collecteur solaire (5) y est bloqué.

5. Dispositif de fixation selon la revendication 3, **caractérisé en ce que** les pièces de maintien (8) élastiques à la manière d'un ressort des pièces de serrage (2) sont réalisées de manière à présenter une forme de crochet.

6. Collecteur solaire et dispositif de fixation selon la revendication 4, **caractérisé en ce que** les pièces de maintien (8) élastiques à la manière d'un ressort des pièces de serrage (2) sont réalisées de manière à présenter une forme de crochet.
